# EUROPEAN PATENT SPECIFICATION

(11) **EP 3 555 540 B1**
(45) Date of publication and mention of the grant of the patent: **15.09.2021**
(21) Application number: 17816698.9
(22) Date of filing: 11.12.2017
(51) Int. Cl.: F26B 17/02, F26B 17/30, F26B 23/00

(54) **APPARATUS FOR DRYING LOOSE WOOD MATERIAL**
VORRICHTUNG ZUM TROCKNEN VON LOSEM HOLZMATERIAL
APPAREIL POUR LE SÉCHAGE DE BOIS EN VRAC

(30) Priority: 13.12.2016 IT 201600125377
(43) Date of publication of application: 23.10.2019
(73) Proprietor: IMAL S.r.l, 41126 San Damaso (MO) (IT)
(72) Inventor: BENEDETTI, Paolo, 41126 MODENA (IT)
(74) Representative: Modiano, Micaela Nadia
(86) International application number: PCT/EP2017/082266
(87) International publication number: WO 2018/108831

(56) References cited:
- WO-A1-2007/013819
- WO-A1-2015/104990
- DE-C- 505 772
- FR-A- 353 127
- US-A- 1 927 313
- US-A- 2 350 209
- US-A- 4 177 575

## Description

The present invention relates to an apparatus for drying loose wood material.

In the processing of loose wood material, such as flakes and shavings used to manufacture panels and articles in general, it is known to provide a drying step which is preliminary to the mixing with glues and additives and to subsequent forming, in order to reduce the degree of humidity of the material itself.

Rotating drum dryers or belt dryers are generally used to perform this step of operation.

Drum dryers of the known type essentially have a cylindrical chamber which is extended horizontally and is kept in rotation about its own longitudinal axis and is crossed by a stream of hot air and by the material to be dried.

Downstream of the drum dryer generally a separation system is provided, generally of the cyclone type, for recovering the particles of loose wood material entrained by the outgoing air stream.

These drum dryers of the known type are not free from drawbacks, which include the fact that in order to increase their productivity it is necessary to increase the operating temperature and/or the rotation rate of the drum.

However, one must consider that agitation by rotation of the loose wood material causes the generation of fine dust, which must be separated by using an expensive additional electric filter in order to render the outgoing air suitable to be introduced in the outside environment according to currently applicable statutory provisions. Of course increasing the rotation rate of the drum consequently increases dust production, especially if reclaimed wood material is used.

Furthermore, it should also be considered that the operating temperature cannot be increased beyond certain values in order to avoid the occurrence of fires and to avoid the deterioration of the dried material which, if extensively excessively "baked" or burned, is poor in organic substances (lignin) and requires the use of greater quantities of glue for the subsequent forming, increasing production costs considerably.

A further drawback of drum dryers is linked to the high energy consumption that is required to heat the air in input.

As an alternative, belt dryers are known which are provided with a conveyor belt made of a material that is permeable to air and closed inside a box-like enclosure. The material to be dried is transferred on top of the belt while it is struck by a stream of air heated by radiators, which is introduced from above the belt and is evacuated from below by means of fans.

However, in this case the need to contain the operating temperature requires the provision of very long belts and to increase consequently the residence time of the material in the dryer.

Furthermore, these belt dryers require the use of high flow rates of heated air and therefore entail an important energy consumption.

Prior art documents US 2350209, US 1927313, FR353127 A, DE505772 C, US4177575 A, WO2007013819 A1 and EP3093598 disclose different drying apparatuses.

The aim of the present invention is to eliminate the drawbacks mentioned above of the background art, by providing an apparatus for drying loose wood material that allows to increase the effectiveness of the treatment by reducing the overall energy consumption and at the same time to not require the use of additional apparatuses for filtering the air from fine dust, such as an electric filter, before introduction in the environment.

Within this aim, an object of the invention is to allow operating temperatures such as to avoid the risk of setting fire to the material and such as to not degrade the processed material.

Another object of the present invention is to allow an increase in production without increasing the operating temperatures.

A still further object of the invention is to provide an apparatus for drying loose wood material that is highly reliable, relatively easy to provide and at competitive costs.

This aim and these and other objects which will become better apparent hereinafter are achieved by the present apparatus for drying loose wood material, as claimed in claim 1.

Further characteristics and advantages of the present invention will become better apparent from the detailed description of two preferred but not exclusive embodiments of an apparatus for drying loose wood material, illustrated by way of nonlimiting example in the accompanying drawings, wherein:
Figure 1 is a partially sectional view of a first embodiment of the apparatus for drying loose wood material according to the invention;
Figure 2 is a partially sectional view of a second embodiment of the apparatus according to the invention.

With particular reference to the figures cited above, the numeral 1 generally designates an apparatus for drying loose wood material, of the type of flakes or shavings of wood generally used to obtain panels or articles in general by forming.

The apparatus 1 comprises a rotating drum dryer 2 which is provided with an inlet 3 and with an outlet 4 for loose wood material M and with an intake port 5 and a discharge port 6 of a first stream F₁ of air.

The drum dryer 2, which is not described in detail since it is of a type that is known to the person skilled in the art, typically provides a cylinder 7 which is extended horizontally and rotates about its own longitudinal axis and inside which a drying chamber is formed which is crossed in a longitudinal direction by the material M and by the first stream F₁. The cylinder 7 has, at a first end, the intake port 5, which is associated with a hot air generator 8 for the introduction of the first stream F₁ in the cylinder 7 through said intake port, and has, at a second end, which is arranged opposite the first one, the discharge port 6.

The inlet 3 is formed above the cylinder 7 at the first end and the outlet 4 is formed below said cylinder at the second end.

Furthermore, the apparatus 1 comprises a belt dryer 9 provided with an entry opening 10 and with an exit opening 11 for the material M and with at least one intake opening 12 and at least one discharge opening 13 for a second stream F₂ of air.

The belt dryer 9, which is not described in detail since it is of a type that is known to the person skilled in the art, conventionally provides for a conveyor belt 14 made of a material that is permeable to air, on which the material M is made to advance from the entry opening 10 to the exit opening 11 and which is accommodated within a substantially boxlike enclosure 15.

Generally, there is a plurality of intake openings 12 and of discharge openings 13 distributed along the conveyor belt 14.

According to the claimed invention, said at least one intake opening (12) and said at least one discharge opening (13) are arranged respectively above and below said conveyor belt so that the second stream of air F₂ passes through the belt itself, which acts as a filter and retains the solid particles entrained by the stream itself.

Preferably, the boxlike enclosure 15 is provided in an upward region and in a downward region with a plurality of ports which are distributed along the extension of the conveyor belt 14 and form respectively the intake openings 12 (three in the figures) and the discharge openings 13 (two in the figures) of the second stream F₂.

Each intake opening 12, arranged above the conveyor belt 14, is associated with a respective radiator 16 for heating the air in input. The various radiators 16 are fed with hot water that arrives from an adjacent boiler 17.

Each discharge opening 13, arranged below the conveyor belt 14, is associated with a respective extraction fan 18.

According to the claimed invention, the air in output from the discharge openings 13 can be introduced directly into the environment since it is already filtered by the conveyor belt 14, which typically has a degree of filtration on the order of 10-20 mg/Nm³ of air, without requiring the installation of separate filtration apparatuses.

The entry opening 10 and the exit opening 11 are formed in the enclosure 15, respectively above the loading side and below the unloading side of the conveyor belt 14.

Furthermore the apparatus 1 provides for conveyor means 19 for transferring the material M which are interposed between the dryers 2 and 9 and means 20 for conveying the first stream F₁ in output from the discharge port 6 to the intake openings 12.

The conveyor means 19 can be constituted by conventional continuous conveyance systems, such as chain conveyors (Redler conveyors), screw feeders or the like.

In this manner it is possible to obtain an effective drying of the material M with a considerable energy saving for the heating of the air in input to the belt dryer 9 and avoiding the use of dedicated apparatuses for the fine filtration of the air (electric filter), since the first stream F₁ loaded with dust, including fine dust, generated by the movement of the material M inside the cylinder 7, is filtered directly by the conveyor belt 14.

In order to increase the obtainable energy recovery, the exhaust gases in output from the boiler 17 also can be conveyed into the conveyance means 20 by means of a supply duct 21.

Furthermore, it is noted that since it is not necessary to perform the complete drying of the material M in the drum dryer 2, it is possible to increase its productivity even without increasing its rotation rate or operating temperature, i.e., for an equal efficiency it is possible to contain the operating temperature in order to avoid the risk of setting fire to the material M or "baking" it.

The conveyance means 20 consist essentially of a system of ducts which are adapted to connect the discharge port 6 to the intake openings 12.

These conveyance means 20 in any case have at least one entry port 22 (two in the figures) for a third stream F₃ of air from the outside environment. The flow rate of the second stream F₂ in input to the belt dryer 9 is in fact greater than the flow rate of the first stream F₁ in output from the drum dryer 2, so that it is necessary to add an amount of air that arrives from the outside environment.

Furthermore, the apparatus 1 can provide for separation means 23, for example of the cyclone type, which are interposed between the discharge port 6 and the conveyance means 20 for the recovery of the coarser particles of material M conveyed by the first stream F₁ in output from the cylinder 7.

It should be noted that any presence of said cyclone separation means 23, usually combined with drum dryers even in systems of the known type, does not affect the complexity and cost of the apparatus according to the invention significantly.

The substantial advantage achieved by means of the apparatus 1 is instead to avoid the installation of dedicated apparatuses for fine filtration (electric filter) of the air stream in output from the drum dryer 2 prior to introduction in the environment.

The installation of the belt dryer 9 associated with the drum dryer 2, in which the air stream in output from said drum is introduced, in fact allows to avoid the electric filter and to obtain, for an equal overall cost of the apparatus 1, a significant energy saving and an increase in the efficiency of the process.

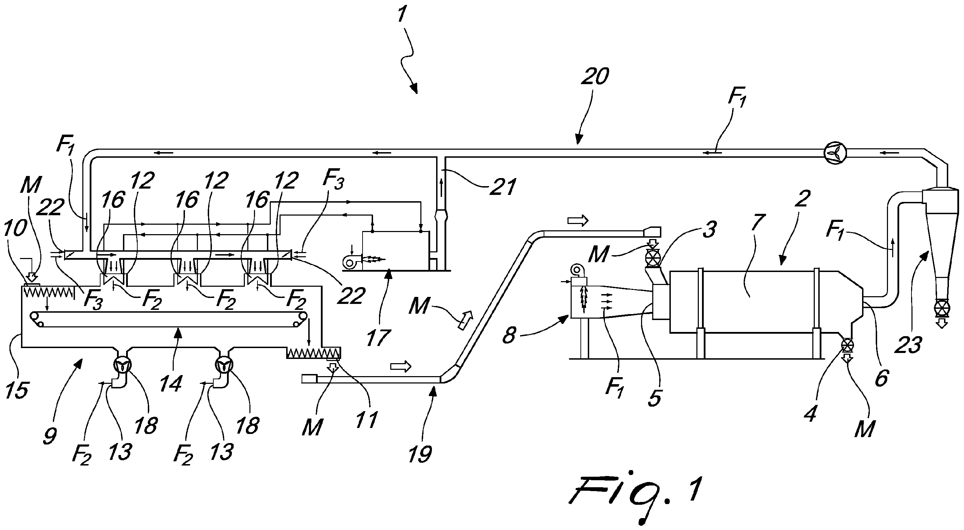

In a first embodiment, shown in Figure 1, the conveyor means 19 are interposed between the exit opening 11 and the inlet 3 for the transfer of the material M from the belt dryer 9 to the drum dryer 2.

In this manner, the belt dryer 9 provides a first step of drying the material M, which is then ended at a higher temperature in the drum dryer 2.

For example, the second stream F₂ can be introduced in the belt dryer 9 at a temperature on the order of 100-120°C so as to provide a partial drying, reducing the degree of humidity of the material M from 100% to 45-70%.

The first stream F₁ instead can be introduced in the drum dryer 2 at a temperature on the order of 150-250°C so as to complete the drying of the material M up to a degree of humidity of approximately 2%, which is ideal for the subsequent processing steps to which the material M must be subj ected.

The first stream F₁ in output from the discharge port 6 maintains a temperature on the order of 80-130°C which allows a considerable energy saving for the heating of the second stream F₂ in input to the belt dryer 9.

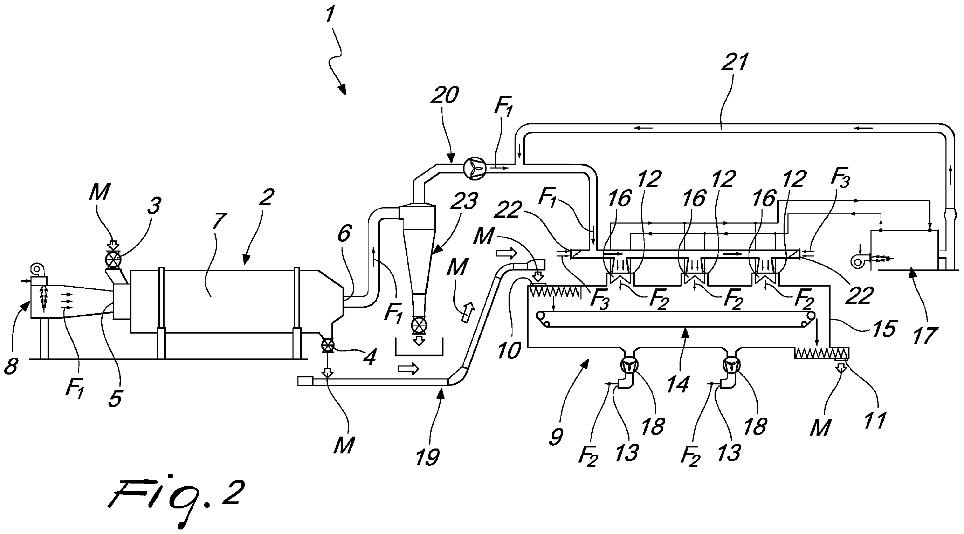

In a second embodiment, shown in Figure 2, the conveyor means 19 are interposed between the outlet 4 and the entry opening 10 for the transfer of the material M from the drum dryer 2 to the belt dryer 9.

In this manner, the drum dryer 2 provides a first step of drying of the material M, which is then ended at a lower temperature in the belt dryer 9.

For example, the first stream F₁ can be introduced in the drum dryer 2 at a temperature on the order of 150-350°C so as to provide a partial drying, reducing the degree of humidity of the material M from 100% to 10-40%.

The second stream F₂ instead can be introduced in the belt dryer 9 at a temperature on the order of 100-120°C so as to complete the drying of the material M to a degree of humidity of approximately 2%, which is ideal for the subsequent processing steps to which the material M must be subjected.

The first stream F₁ in output from the discharge port 6 maintains a temperature on the order of 80-130°C, which allows considerable energy saving for the heating of the second stream F₂ in input to the belt dryer 9.

In practice it has been found that the described invention achieves the proposed aim and objects and in particular the fact is stressed that the apparatus according to the invention allows to perform an effective drying of the loose wood material, with an overall energy saving and without requiring the use of electric filters.

Furthermore, the apparatus according to the invention allows to maintain the operating temperature, in particular of the drum dryer, below values above which there would be the risk of setting fire to the material or deteriorating it.

Moreover, the apparatus according to the invention allows to increase productivity without increasing the operating temperature or the rotation rate of the drum dryer, since part of the residual humidity of the material is removed during treatment in the belt dryer.

Not least, the apparatus according to the invention allows to obtain dried material of optimum quality and with a good content of organic substances (lignin), so as to not require the use of excessive quantities of glue for subsequent forming.

Finally, the apparatus according to the invention can be provided in existing installations. For example, in the case of installations in which a drum dryer is already present, the electric filter can be replaced with a belt dryer associated with the conveyor means and with the conveyance means described above. As an alternative, if a belt dryer is already present, the efficiency of the apparatus can be increased, without extending the belt excessively, by associating a drum dryer with corresponding conveyor and conveyance means.

## Claims

1. An apparatus (1) for drying loose wood material, comprising
a rotating drum dryer (2) provided with an inlet (3) and an outlet (4) for loose wood material (M) and with an intake port (5) and a discharge port (6) for a first stream (F₁) of heated air,
a belt dryer (9) provided with an entry opening (10) and an exit opening (11) for loose wood material (M) and with at least one intake opening (12) and at least one discharge opening (13) for a second stream (F₂) of heated air,
conveyor means (19) for transferring the loose wood material (M), which are interposed between said drum dryer (2) and said belt dryer (9), and
means (20) for conveying the first stream (F₁) in output from said discharge port (6) toward said at least one intake opening (12),
wherein said belt dryer (9) comprises a conveyor belt (14) which is permeable to air, is interposed between said at least one intake opening (12) and said at least one discharge opening (13), and is adapted to filter said second stream (F₂) for direct introduction into the environment, and wherein said at least one intake opening (12) and said at least one discharge opening (13) are arranged respectively above and below said conveyor belt (14).

2. The apparatus (1) according to claim 1, **characterized in that** said conveyor means (19) are interposed between said outlet (4) and said entry opening (10) for the transfer of the loose wood material (M) from said drum dryer (2) to said belt dryer (9).

3. The apparatus (1) according to claim 1, **characterized in that** said conveyor means (19) are interposed between said exit opening (11) and said inlet (3) for the transfer of the loose wood material (M) from said belt dryer (9) to said drum dryer (2).

4. The apparatus (1) according to claim 1, **characterized in that** it comprises separation means (23) which are interposed between said discharge port (6) and said conveyance means (20) for the recovery of the coarsest particles of material (M) conveyed by the first stream (F₁) in output from said discharge port (6).

5. The apparatus (1) according to claim 4, **characterized in that** said separation means (23) are of the cyclone type.

6. The apparatus (1) according to claim 1, **characterized in that** said conveyor belt (14) has a degree of filtration on the order of 10-20 mg/Nm³ of air.

7. The apparatus (1) according to claim 1, **characterized in that** said conveyance means (20) comprise at least one entry port (22) for a third stream (F₃) of air from the outside environment which is adapted to mix with said first air stream (F₁) in output from said discharge port (6) for supplying said second air stream (F₂) to said at least one intake opening (12), such that the flow rate of the second air stream (F₂) is greater than the flow rate of the first air stream (F₁).

## Patentansprüche

1. Eine Vorrichtung (1) zum Trocknen von losem Holzmaterial, die Folgendes umfasst:
einen Drehtrommeltrockner (2), ausgestattet mit einem Einlass (3) und einem Auslass (4) für loses Holzmaterial (M) und mit einer Einlassöffnung (5) und einer Auslassöffnung (6) für einen ersten Strom (F₁) erwärmter Luft,
einen Bandtrockner (9), ausgestattet mit einer Eintrittsöffnung (10) und einer Austrittsöffnung (11) für loses Holzmaterial (M) und mit mindestens einer Einlassöffnung (12) und mindestens einer Ablassöffnung (13) für einen zweiten Strom (F₂) erwärmter Luft,
Fördermittel (19) zum Überführen des losen Holzmaterials (M), die zwischen dem Trommeltrockner (2) und dem Bandtrockner (9) angeordnet sind, und
Mittel (20) zum Fördern des ersten Stroms (F₁), der aus der Ablassöffnung (6) kommt, zu der mindestens einen Einlassöffnung (12),
wobei der Bandtrockner (9) ein Förderband (14) umfasst, das luftdurchlässig ist, zwischen der mindestens einen Einlassöffnung (12) und der mindestens einen Ablassöffnung (13) angeordnet und ausgebildet ist, um den zweiten Strom (F₂) zwecks direkten Ablassens in die Umgebung zu filtern, und
wobei die mindestens eine Einlassöffnung (12) und die mindestens eine Ablassöffnung (13) über beziehungsweise unter dem Förderband (14) angeordnet sind.

2. Die Vorrichtung (1) gemäß Anspruch 1, **dadurch gekennzeichnet, dass** die Fördermittel (19) für den Transfer des losen Holzmaterials (M) von dem Trommeltrockner (2) zu dem Bandtrockner (9) zwischen dem Auslass (4) und der Eintrittsöffnung (10) angeordnet sind.

3. Die Vorrichtung (1) gemäß Anspruch 1, **dadurch gekennzeichnet, dass** die Fördermittel (19) für den Transfer des losen Holzmaterials (M) von dem Bandtrockner (9) zu dem Trommeltrockner (2) zwischen der Austrittsöffnung (11) und dem Einlass (3) angeordnet sind.

4. Die Vorrichtung (1) gemäß Anspruch 1, **dadurch gekennzeichnet, dass** sie Trennungsmittel (23) umfasst, die für die Rückgewinnung der gröbsten Partikel von Material (M), das vom ersten Strom (F₁) gefördert wird, der aus der Ablassöffnung (6) kommt, zwischen der Ablassöffnung (6) und den Fördermitteln (20) angeordnet sind.

5. Die Vorrichtung (1) gemäß Anspruch 4, **dadurch gekennzeichnet, dass** die Trennungsmittel (23) vom Zyklon-Typ sind.

6. Die Vorrichtung (1) gemäß Anspruch 1, **dadurch gekennzeichnet, dass** das Förderband (14) einen Filtrationsgrad in der Größenordnung von 10-20 mg/Nm³ Luft hat.

7. Die Vorrichtung (1) gemäß Anspruch 1, **dadurch gekennzeichnet, dass** die Fördermittel (20) mindestens eine Eintrittsöffnung (22) für einen dritten Luftstrom (F₃) von der äußeren Umgebung umfassen, der ausgebildet ist, um sich mit dem ersten Luftstrom (F₁) zu mischen, der aus der Ablassöffnung (6) kommt, um den zweiten Luftstrom (F₂) der mindestens einen Einlassöffnung (12) zuzuführen, so dass die Strömungsrate des zweiten Luftstroms (F₂) größer ist als die Strömungsrate des ersten Luftstroms (F₁).

## Revendications

1. Appareil (1) pour le séchage de bois en vrac, comprenant
un séchoir à tambour rotatif (2) doté d'une entrée (3) et d'une sortie (4) pour le matériau de bois en vrac (M) et d'un port d'admission (5) et d'un port d'évacuation (6) pour un premier flux (F₁) d'air chauffé,
un séchoir à bande (9) doté d'une ouverture d'entrée (10) et d'une ouverture de sortie (11) pour le matériau de bois en vrac (M) et d'au moins une ouverture d'admission (12) et d'au moins une ouverture d'évacuation (13) pour un deuxième flux (F₂) d'air chauffé,
des moyens de transport (19) destinés à transférer le matériau de bois en vrac (M), qui sont disposés entre le séchoir à tambour (2) et le séchoir à bande (9), et
un moyen (20) destiné à acheminer le premier flux (F₁) délivré par ledit port d'évacuation (6) vers ladite ouverture d'admission (12), au nombre d'au moins une,
dans lequel ledit séchoir à bande (9) comprend une bande transporteuse (14) qui est perméable à l'air, est disposée entre ladite ouverture d'admission (12), au nombre d'au moins une, et ladite ouverture d'évacuation (13), au nombre d'au moins une, et est adaptée pour filtrer ledit deuxième flux (F₂) en vue d'une distribution directe dans l'environnement, et dans lequel ladite ouverture d'admission (12), au nombre d'au moins une, et ladite ouverture d'évacuation (13), au nombre d'au moins une, sont placées respectivement au-dessus et en dessous de ladite bande transporteuse (14).

2. Appareil (1) selon la revendication 1, **caractérisé en ce que** lesdits moyens de transport (19) sont disposés entre ladite sortie (4) et ladite ouverture d'entrée (10) en vue du transfert du matériau de bois en vrac (M) dudit séchoir à tambour (2) audit séchoir à bande (9).

3. Appareil (1) selon la revendication 1, **caractérisé en ce que** lesdits moyens de transport (19) sont disposés entre ladite ouverture de sortie (11) et ladite entrée (3) en vue du transfert du matériau de bois en vrac (M) dudit séchoir à bande (9) vers le séchoir à tambour (2).

4. Appareil (1) selon la revendication 1, **caractérisé en ce qu'**il comprend des moyens de séparation (23) qui sont disposés entre ledit port d'évacuation (6) et lesdits moyens de transport (20) en vue de la récupération des particules les plus grossières du matériau (M) transportées par le premier flux (F₁) délivré par ledit port d'évacuation (6).

5. Appareil (1) selon la revendication 4, **caractérisé en ce que** lesdits moyens de séparation (23) sont de type cyclone.

6. Appareil (1) selon la revendication 1, **caractérisé en ce que** ladite bande transporteuse (14) présente un degré de filtration de l'ordre de 10 à 20 mg/Nm³ d'air.

7. Appareil (1) selon la revendication 1, **caractérisé en ce que** lesdits moyens de transport (20) comprennent au moins un port d'entrée (22) pour un troisième flux (F₃) d'air provenant de l'environnement extérieur, qui est adapté pour se mélanger avec ledit premier flux d'air (F₁) délivré par ledit port d'évacuation (6) en vue de fournir ledit deuxième flux d'air (F₂) à ladite ouverture d'admission (12), au nombre d'au moins une, de manière à ce que le débit du deuxième flux d'air (F₂) soit plus grand que le débit du premier flux d'air (F₁).
